# EUROPEAN PATENT SPECIFICATION

(11) **EP 2 734 013 B1**
(45) Date of publication and mention of the grant of the patent: **09.01.2019**
(21) Application number: 12192749.5
(22) Date of filing: 15.11.2012
(51) Int. Cl.: H05B 37/02

(54) **Self-adapting driver for a light source**
Selbstanpassender Treiber für eine Lichtquelle
Pilote auto-adaptatif pour source de lumière

(43) Date of publication of application: 21.05.2014
(73) Proprietor: Helvar Oy Ab, 02150 Espoo (FI)
(72) Inventor: Juslén, Henri, 02150 ESPOO (FI); Vuorio, Pekka, 02150 ESPOO (FI)
(74) Representative: Berggren Oy, Helsinki & Oulu

(56) References cited:
- WO-A2-2008/078253
- US-A1- 2006 278 808
- US-A1- 2011 175 534
- US-A1- 2011 221 350

## Description

### FIELD OF THE INVENTION

The invention relates to control of operation of one or more light sources. In particular, embodiments of the invention relate to an apparatus that is able to adapt one or more control parameters that control operation of the one or more light sources on basis of observed lighting characteristics, as well as to a method and to a computer program for carrying out the adaptation.

### BACKGROUND OF THE INVENTION

A light source, such as a fluorescent lamp, a light emitting diode (LED), a high-intensity discharge (HID) lamp or an incandescent lamp, may be driven with a driver that is adapted to adjust the level of lighting provided by the light source in accordance with observed environmental parameters. Environmental parameters suitable for controlling the adjustment of the level of lighting may be obtained from one or more suitable sensors. As an example, a light sensor may be employed to provide information regarding the prevailing level of ambient light and the driver may be configured to adjust the light intensity of the light source in accordance with the observed level of ambient light. As another example, a proximity sensor may be employed to provide information regarding a person or persons being present in a room served by the light source and the driver may be configured e.g. to switch the light source on or off in accordance with the indication of presence of a person or persons in the room.

However, such arrangements typically require manual configuration of control parameters that control operation of the driver, and hence the light source, upon installation of the driver/light source in order for the driver to correctly react to the information provided by the sensors in its operating environment. Moreover, such procedures may be relatively complex and they are, nevertheless, prone to misconfiguration.

Another class of known arrangements for controlling a light source on basis of environmental parameters relies on a centralized control of a number of light sources, where a central controller obtains information from one or more sensors and coordinates operation of a number of light sources on basis of obtained sensor information. However, such an arrangement typically results in a complex and often also expensive system involving a number of separate components and highly complex configuration of control parameters enabling centralized control and reconfiguration of the characteristics of lighting according the current need, thereby making it an unattractive choice for lighting solutions where the desired characteristics of lighting remain essentially constant. Moreover, such arrangements typically require reconfiguration of the whole arrangement upon changing the configuration thereof, possibly causing inconvenience of use and maintenance over the life cycle of the arrangement.

A prior art document US 2006/0278808 A1 discloses an apparatus and a method for enabling an automatic calibration sequence for a light control system. An ambient light sensor detects the amount of ambient light within a given zone. A microprocessor initiates dimming and starts the auto-calibration sequence. Responsive to the amount of ambient light, the dimming circuit controls the power supplied to loads. Minimum light levels during the auto-calibration sequence are stored, and lowest level of ambient light is determined for setting and storing a target voltage level.

### SUMMARY OF THE INVENTION

It is an object of the present invention to provide an approach that facilitates automatic and autonomous adaptation, programming or self-configuration of a light source to operate on basis of information provided thereto by one or more sensors, thereby providing straightforward installation that also eliminates the possibility of misconfiguration due to a human error during the installation/ configuration process.

The objects of the invention are reached by an apparatus, by a method, by a computer program and by an arrangement as defined by the respective independent claims.

According to a first aspect of the invention, an apparatus for driving a light source of a luminaire is provided. The apparatus comprises a sensor portion configured obtain sensory information comprising information indicative of observed light level in an area served by the luminaire, a control portion configured to control operation of the light source in accordance with the sensory information and in accordance with one or more control parameters and an adaptation portion for determining the one or more control parameters. The adaptation portion is configured to initiate an adaptation period in response to a request thereto and to determine values for the one or more control parameters on basis of observed light level during the adaptation period. The adaptation portion is also configured to determine a dimming pattern on basis of observed light level during the adaptation period, and the control portion is configured to, after the adaptation period, employ said dimming pattern in switching off said light source.

According to a second aspect of the invention, a method for driving a light source of a luminaire is provided. The method comprises obtaining sensory information comprising information indicative of observed light level in an area served by the luminaire, controlling operation of the light source in accordance with the sensory information and in accordance with one or more control parameters; and determining the one or more control parameters. The determination of the one or more control parameters comprises initiating an adaptation period in response to a request thereto and determining values for the one or more control parameters on basis of observed light level during the adaptation period. The method comprises determining a dimming pattern on basis of observed light level during the adaptation period for use in switching off said light source after the adaptation period

According to a third aspect of the invention, a computer program for driving a light source of a luminaire is provided. The computer program comprises one or more sequences of one or more instructions which, when executed by one or more processors, cause an apparatus to at least perform the method according to the second aspect of the invention.

The computer program may be embodied on a volatile or a non-volatile computer-readable record medium, for example as a computer program product comprising at least one computer readable non-transitory medium having program code stored thereon, the program code, which when executed by an apparatus, causes the apparatus at least to perform the operations described hereinbefore for the computer program in accordance with the third aspect of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Figure 1 schematically illustrates an exemplifying arrangement in accordance with an embodiment of the present invention.
Figure 2 schematically illustrates a driver in accordance with an embodiment of the present invention.
Figure 3 schematically illustrates an exemplifying arrangement in accordance with an embodiment of the present invention.
Figure 4 schematically illustrates a sensor module and an exemplifying arrangement in accordance with an embodiment of the present invention.
Figure 5 schematically illustrates an adaptation module and an exemplifying arrangement in accordance with an embodiment of the present invention.
Figure 6 illustrates a method in accordance with an embodiment of the present invention.
Figure 7 illustrates a method in accordance with an embodiment of the present invention.
Figure 8 illustrates a method in accordance with an embodiment of the present invention.
Figure 9 illustrates a method in accordance with an embodiment of the present invention.
Figure 10 illustrates an apparatus in accordance with an embodiment of the present invention.

### DETAILED DESCRIPTION

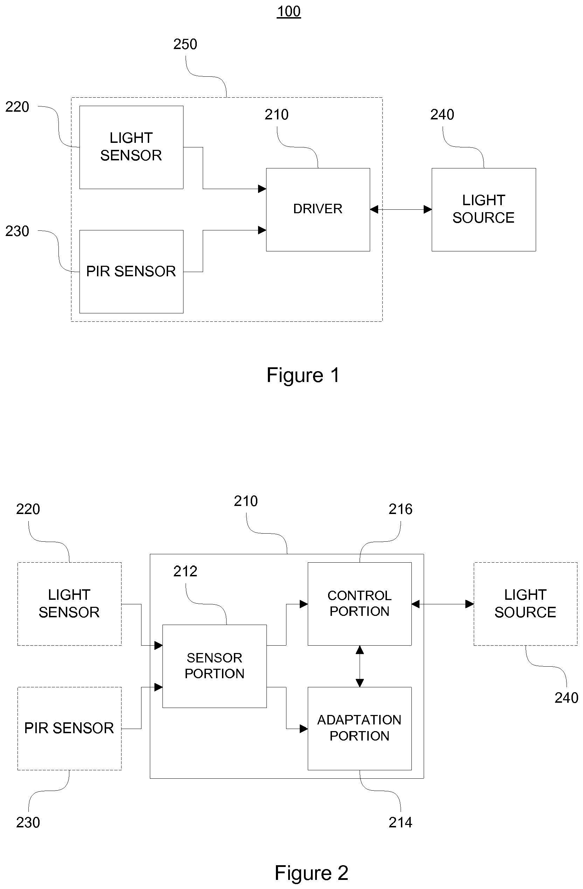

Figure 1 schematically illustrates an exemplifying arrangement 200 comprising a driver 210, a light sensor 220, a passive infrared (PIR) sensor 230 and a light source 240. The driver 210 is configured to drive operation of the light source 240 in accordance with sensory signal(s) provided by the light sensor 220 and the PIR sensor 230.

The driver 210 may be provided as a driver apparatus or as a part of such a driver apparatus. The light sensor 220 may be provided in a separate light sensor apparatus that may be coupled to the driver 210 in the driver apparatus, either directly or via an intervening element. Alternatively, the light sensor 220 may be provided in the same apparatus with the driver 210, e.g. in a driver apparatus. Along similar lines, the PIR sensor 230 may be provided in a separate PIR sensor apparatus that may be coupled to the driver apparatus hosting the driver 210, either directly or via an intervening element. Alternatively, the PIR sensor 230 may be provided in the same apparatus with the driver 210, e.g. in a driver apparatus. As a further alternative, the light sensor 220 and the PIR sensor 230 may be both provided in a sensor apparatus separate from the driver apparatus, which sensor apparatus may be coupled to the driver 210 in a driver apparatus, either directly or via an intervening element.

The driver 210, possibly together with the light sensor 220 and/or the PIR sensor 230 may be provided in a driver apparatus integrated to a luminaire 250, the luminaire 250 comprising an arrangement for attaching the light source 240 and/or arrangement for connecting or coupling the light source 240 to the driver 210. Although depicted in Figure 1 with a single light source 240, the driver 210 may be configured to drive one or more light sources and the luminaire 250 may be provided with an arrangement for attaching the one or more light sources thereto and/or with an arrangement for connecting or coupling the one or more light sources to the driver 210.

Figure 2 schematically illustrates the driver 210. The driver 210 comprises a sensor portion 212 configured to obtain sensory information from the light sensor 220 and possibly from the PIR sensor 230, an adaptation portion 214 for determining one or more control parameters during an adaptation period and a control portion 216 for controlling operation of the light source 240 in accordance with the one or more control parameters and the sensory information.

The driver 210 is, preferably, provided as a self-standing entity that is able to control the operation of the light source 240 and/or the luminaire 250 without control from an external entity, such as a centralized lighting controller controlling operation of a lighting system comprising a number of light sources or luminaires. Moreover, the driver 210 is provided as a self-adapting entity that is able to adapt the one or more control parameters according to the operating environment of the light source 240 and/or the luminaire 250 independently of any centralized control and without the need for manual configuration. In this regard, the driver 210 is capable of autonomously controlling its operation on basis of the sensory information provided thereto and adapting its operation according to its operating environment on basis of the sensory information, as described in detail in examples provided in the following.

The driver 210 typically comprises further portions, for example a power converter for converting an operating power provided to the driver 210 or the driver apparatus to exhibit characteristics suitable for driving the operation of the light source 240 and feedback circuitry between the light source 240 and the power converter in order to drive the power converter in a desired manner. In context of the present invention such driver functionality well known in the art may be conceptually provided as a driver portion of the driver 210. The driver 210 may be provided in a driver apparatus, such as an electrical ballast for driving one or more fluorescent lamps, as a driver apparatus for driving one or more light emitting diodes (LEDs) or as a driver apparatus for driving one or more high-intensity discharge (HID) lamps.

The sensor portion 212 may comprise means for receiving sensory information from the light sensor 220 provided in a separate light sensor apparatus. Similarly, the sensor portion 210 may comprise means for receiving sensory information from the PIR sensor 230 provided in a separate PIR sensor apparatus. As an alternative in this regard, the sensory information may originate from a sensor apparatus comprising both the light sensor 220 and the PIR sensors 230. Alternatively, the sensor portion 212 may comprise the light sensor 220 and/or the PIR sensor.

The sensor portion 212 may comprise a memory or have an access to a memory in the driver 210 for storing the obtained sensory information. The sensor portion 212 may be configured to store such information only during the adaptation period for subsequent analysis and use by the adaptation portion 214 and/or the control portion 216. Alternatively, the sensor portion may be configured to store the sensory information or portions thereof also outside the adaptation periods e.g. as further information to be used as basis of the adaptation and/or to facilitate the control portion 216 controlling the operation of the light source 240 in accordance with the one or more control parameters and the sensory information.

In particular, in order to enable evaluation of the characteristics of the observed light level during the adaptation period, either during or after completion of the adaptation period, the sensor portion 212 may be configured to record and store a sequence of observations on the light level during the adaptation period, the sequence of observations preferably covering the whole duration of the adaptation period. Each observation in the sequence may represent observed light level over an averaging period of predetermined duration, possibly providing a sequence number and/or a timestamp indicating its position in the sequence of observations and/or its timing with respect to the other observations in the sequence. The averaging period may be, for example, in the range from 1 minute to two hours, for example one hour. The averaging process serves to filter, or exclude, the effect of short term reflections and other disturbances in the observed light level, hence making the estimation of the extent of variation in the observed light level more reliable.

The sensory information originating from the light sensor 220 comprises information indicative of observed light level in an area served, i.e. illuminated, by the light source 240. The observed light level may be employed during the adaptation period by the adaptation portion 214 for determination of the one or more control parameters and after completion of the adaptation period by the control portion 216, together with the one or more control parameters, to adjust the light intensity of the light source 240. In particular, the adjustment of the light intensity in accordance with the observed light level after completion of the adaptation period may involve adjustment of the light intensity of the light source 240 such that the control portion 216 is configured to increase or decrease the light intensity of the light source 240 in order to bring the observed light intensity to or as close as possible to a target light level. The target light level may be determined as one of the one or more control parameters on basis of observed light levels during the adaptation period, or a predetermined default value may be employed as the target light level.

The sensory information originating from the PIR sensor 230 comprises presence information indicative of presence of a person or persons in the area served, i.e. illuminated, by the light source 240. The presence information may be employed by the control portion 216 during the adaptation period to switch the light source 240 on or off in accordance with the presence information. In particular, during the adaptation period the control portion 216 is configured to switch the light source on to a predetermined light intensity and to keep the light source switched on at said predetermined light intensity in response to the presence information indicating presence of a person or persons. Conversely, during the adaptation period the control portion 216 is configured to switch the light source 240 off and to keep the light source off in response to the presence information indicating no persons to be present. Switching the light source 240 off in response to the presence information changing from indicating presence of one or more persons into indicating no persons to be present may involve a predetermined delay in switching the light source 240 off. Such a predetermined switch-off delay may be for example in the range from 1 minute to 30 minutes, e.g. 10 minutes.

Alternatively, instead of applying a predetermined switch-off delay during the adaptation period, the switch-off delay may be a variable switch-off delay randomly chosen from a predetermined range of switch-off delays, e.g. from the range from 8 to 12 minutes. Such randomization serves e.g. to facilitate more reliable evaluation of the extent of change in observed light level upon switching the light source on or off during the adaptation period, described in more detail hereinafter, in a scenario where further light sources and/or further luminaires are serving the area served by the luminaire 250.

After completion of the adaptation period the control portion 216 may employ the presence information in a manner similar to that applied during the adaptation period with the exception that the switching off may involve switching from the on state to the off state via a dimming pattern that may involve dimming the light source 240 from the current light intensity to a minimum light intensity during a first period and switching the light source 240 off after a second period following the first period. The dimming pattern may be a predetermined default pattern or the dimming pattern may be determined on basis of observed light level during the adaptation period, as described in more detail hereinafter. Along similar lines, the minimum light intensity may be a predetermined default value or the minimum light intensity may be determined on basis of observed light level during the adaptation period.

The adaptation portion 214 is configured to initiate the adaptation period in response to a request to do so. The request may be provided by the control portion 216. In particular, the control portion 216 may be configured to request the adaptation portion 214 to initiate the adaptation period in response to the activation of the driver 210 e.g. upon installation for the first time and/or upon reactivation of the driver 210 upon installing the driver 210 and the luminaire 250 in a new operating environment, and/or upon replacing the light source 240 with a new one. As further example, the control portion 216 may be configured to request the adaptation portion 214 to initiate the adaptation period in response to the one or more control parameters having no valid values and/or in response to connecting the light sensor 220 and/or the PIR sensor 230 to the driver 210. The one or more control parameters and their current values may be stored in a memory in the driver 210 or in a memory otherwise accessible by the control portion 216.

As a yet further example, alternatively or additionally, the control portion 216 may be configured to request the adaptation portion 214 to initiate the adaptation period in response to a predefined sequence of observations provided by the light sensor 220. As an example, such a predefined sequence may comprise the observed light level falling below a predefined threshold value for a period exceeding a predefined threshold duration while the light source 240 is being switched on. Such a sequence may be created by a user e.g. by covering the light sensor 220 for a period exceeding the predefined threshold duration. This may be convenient e.g. in case the lighting conditions in the area served by the light source 240 have changed and/or in case a malfunction or misconfiguration of the driver 210 is detected or suspected.

In order to determine the one or more control parameters for the control portion 216 to apply after completion of the adaptation period, the adaptation portion 214 is, preferably, configured to cause the control portion 216 to operate the light source 240 at the first predetermined light intensity during the adaptation period regardless of the information indicative of the prevailing observed light level. In other words, between initiation and completion of the adaptation period the adaptation portion 214 is configured to cause the control portion 216 to operate the light source 240 at the first predetermined light intensity when the light source 240 is being switched on. The first predetermined light intensity is a high light intensity, e.g. in the range 90 % to 100 % of the light intensity the light source 240 is capable of providing, preferably, the maximum (i.e. 100 %) light intensity the light source 240 is capable of providing. Applying such a high light intensity during the adaptation period serves to create a reference light intensity for subsequent determination of the one or more control parameters. Moreover, in case the adaptation period is applied upon activation of the driver 210 and/or upon replacing the light source 240 with a new one, applying the high light intensity, preferably the maximum light intensity of the light source 240, serves to ensure proper performance of the light source 240 throughout its life cycle. This latter aspect may be especially pronounced in case the light source 240 is a fluorescent lamp.

The adaptation period preferably has a predetermined duration. In particular, the duration of the adaptation period may be measured as the time of the light source 240 being switched on since initiation of the adaptation period. As an example, the adaptation period may comprise one or more consecutive periods of the light source 240 being switched on, such that the sum of the durations of these one or more periods results in a predetermined overall duration, while the periods of the light source 240 being switched off are not considered as part of the adaptation period. Consequently, the adaptation period is guaranteed to have a known duration that may be set such that it guarantees a sufficient number of observations regarding the light level to be available for the adaptation portion 214.

The predetermined overall duration may be a fixed duration that is independent of the origin or reason for initiating the adaptation period. Such fixed duration may be, for example, duration in the range from 75 to 150 hours, e.g. 100 hours. Alternatively, a first predetermined overall duration may be applied in case the adaptation period is initiated in response to first-time activation of the driver 210 and/or in response to replacing the light source 240 with a new one, whereas a second predetermined overall duration may be applied in case of user-initiated adaptation period.

Alternatively, the duration of the adaptation period may comprise one or more consecutive periods of the light source 240 being switched on during a time period of predetermined duration since initiation of the adaptation period. Hence, instead of considering the on-time of predetermined duration the adaptation period may be considered complete upon a predetermined period of wall-clock time having elapsed since initiation of the adaptation period, this period of wall-clock time covering both on-time and off-time of the light source 240. As an example, the predetermined period of wall-clock time may be in the range from a few days to a few weeks, e.g. one week. Consequently, unlike in the previous example, the duration of the adaptation period is not fixed while on the other hand the adaptation period will be completed after a known period of time.

As a further example, the adaptation period may be considered completed after a predetermined number of switching the light source 240 on and/or off has been detected. This criterion for completion of the adaptation period may be combined with the predetermined duration, e.g. in such a way that the adaptation period is considered complete when both the predetermined number of switching the light source 240 on and/off have been detected and the predetermined period (of on-time or wall-clock time) has elapsed. As a variation of this example, the criterion regarding the predetermined number of times of switching the light source 240 on and/or off may consider only periods of the light source 240 being switched on exceeding a predetermined period, where the predetermined period may be e.g. the averaging period of predetermined duration described hereinbefore.

The adaptation portion 214 may be configured to determine the one or more control parameters in accordance with the extent of variation in the observed light level during the adaptation period. Both the set of one or more control parameters to be defined and the values thereof may be dependent on the extent of variation.

The one or more control parameters to be determined on basis of the observed light level during the adaptation period may comprise a target light level, which target light level may be employed, after completion of the adaptation period, by the control portion 216 in adjustment of the light intensity of the light source 240 in accordance with observed light level, as described hereinbefore. Alternatively or additionally, the one or more control parameters may comprise parameters controlling the speed of said adjustment of the light intensity and/or parameter(s) setting a maximum or a minimum allowed light intensity for the light source 240. The control parameters described hereinbefore serve merely as examples of possible control parameters and the adaptation portion 214 may be configured to determine control parameters of other type instead of or in addition to the ones described hereinbefore.

The adaptation portion 214 may be configured to classify the extent of variation in the observed light level during the adaptation period into one of a plurality of classes. An example applying two classes, low level of variation and a high level variation, is described in the following.

In this regard, the high level of variation in the observed light level during the adaptation period may be considered to indicate that the area served by the light source 240 is also receiving daylight for extended periods of time e.g. through a window, through a skylight, or through another arrangement for letting the daylight to enter the area. On the other hand, the low level of variation in the observed light level during the adaptation period may be considered to indicate that the area served by the light source 240 is not receiving a significant amount of daylight and is hence either in a room without windows or is far from a window or other 'source' of daylight.

The distinction between the low level of variation and the high level of variation in the observed light level may be made for example by determining whether a measure descriptive of the extent of variation in the observed light level derived on basis of the observations recorded during the adaptation period meets a predetermined criterion: the variation in light level may be considered as low in response to said measure meeting the predetermined criterion while the variation may be considered as high in response to said measure failing to meet the predetermined criterion.

The measure descriptive of the extent of variation in the observed light level may be determined, for example, as the difference between a maximum observed light level and a minimum observed light level during the adaptation period. As another example, said measure may be determined as the difference between the 95^{th} percentile and the 5^{th} percentile values of the observed light levels during the adaptation period. Consequently, the variation in observed light level meeting the predetermined criterion may comprise said difference failing to exceed a predetermined threshold and the variation failing to meet the predetermined criterion may comprise said difference exceeding the predetermined threshold. The predetermined threshold may be set, for example, to a value indicating the maximum (or the 95^{th} percentile of the) observed light level exceeding the minimum (or the 5^{th} percentile of the) observed light level by a given percentage, for example by a percentage in the range 20 % to 40%, e.g. 30 %. As another example, the predetermined threshold may be set to a value indicating the maximum (or the 95^{th} percentile of the) observed light level exceeding the minimum (or the 5^{th} percentile of the) observed light level by a certain absolute amount determined as lumens or as other measure descriptive of the light level provided by the light source 240.

As a further example, the measure descriptive of the extent of variation may be determined as the difference between a maximum observed light level and the average observed light level during the adaptation period or as the difference between the average observed light level and a minimum observed light level during the adaptation period. As yet further examples, the measure descriptive of the extent of variation may be based on e.g. the standard deviation of the observed light levels or the variance of the observed light levels with the predetermined criterion comprising a threshold value indicating a minimum value of the standard deviation or the minimum value of the variance to be considered as an indication of high level of variation. Instead of the standard deviation or the variance, another statistical measure derivable from the observed light levels together with a respective predetermined criterion may be applied.

Consequently, the adaptation portion 214 may be configured to determine the target light level on basis of the average observed light level during the the adaptation period in response to the low level of variation in observed light level during the adaptation period and to determine the target light level on basis of a minimum observed light level during the adaptation period in response to the high level of variation in observed light level during the adaptation period.

As an example of determining the target light level on basis of the average observed light level, the adaptation portion 214 may be configured to scale the light level values observed on basis of operating the light source 240 at the first predetermined light intensity into scaled light level values at a second predetermined light intensity, wherein the second predetermined light intensity is lower than the first predetermined light intensity, and to determine the target light level as the average of the scaled light level values. An equivalent approach determines the average of the light level values observed on basis of operating the light source 240 at the first predetermined light intensity and determines the target light level by scaling the determined average into the second predetermined light intensity.

Along similar lines, as an example of determining the target light level on basis of the minimum observed light level, the adaptation portion 214 may apply scaling to convert the light level values observed on basis of operating the light source 240 at the first predetermined light intensity or values derived therefrom into scaled value(s) at a third predetermined light intensity, wherein the third predetermined light intensity is lower than the second predetermined light intensity. Consequently, the target light level may be determined by multiplying the minimum value in the scaled domain by a predetermined correction factor, which predetermined correction factor may have, for example, a value in the range from 1 to 1.2, e.g. 1.05.

As an example, the second predetermined light intensity may be in the range from 80 % to 90 % of the first predetermined light intensity, e.g. 85 % of the first predetermined light intensity, whereas the third predetermined light intensity may be, for example, in the range from 75 % to 85 % of first predetermined light intensity, e.g. 80 % of first predetermined light intensity. The most suitable values for the second and third predetermined light intensities may be selected, for example, in view of the type of the light source 240 (e.g. a LED, a fluorescent lamp, a HID lamp, etc.), the purpose of the adaptation period (e.g. an initial adaptation upon installation of a luminaire, an adaptation upon installing a new light source to a pre-installed luminaire, re-adaptation due to change in operating environment, etc.) and/or on basis of the observed light level during the adaptation period or the variation thereof.

Alternatively or additionally, the adaptation portion 214 may be configured to determine, in response to the low level of variation, control parameters controlling the speed of adjustment such that the speed of adjustment towards higher light intensity will be faster than the speed of adjustment towards lower light intensity and to determine, in response to the high level of variation, said control parameters controlling the speed of adjustment such that the speed of adjustment towards higher light intensity will be the same or essentially the same as the speed of adjustment towards lower light intensity. Moreover, the adaptation portion 214 may be configured to determine, in response to the low level of variation, a control parameter limiting the minimum allowed light intensity according to a predetermined minimum light intensity. The minimum allowed light intensity may be, for example, in the range from 70 % to 85 % of the full light intensity of the light source 240, e.g. 80 % of the full light intensity.

Instead of operating the light source at the first predetermined light intensity throughout the adaptation period, the adaption portion 214 may be configured to apply the first predetermined light intensity for a first portion of the adaptation period and to apply a lower light intensity for a second portion of the adaptation period. Selection of the light intensity for the second portion may be made in dependence of the extent of variation in observed light level during the first portion of the adaptation period, e.g. such that that the second predetermined light intensity is applied in response to the observed light intensity during the first portion of the adaptation period exhibiting the low level of variation, whereas the third predetermined light intensity is applied in response to the observed light intensity during the first portion of the adaptation period exhibiting the high level of variation.

In the approach that involves the second portion of the adaptation period making use of light intensity different from that of the first portion, the target light level is, preferably, determined on basis of the observed light levels during the second portion of the adaptation period, whereas the extent of variation in the observed light level may be determined on basis of the first portion of the adaptation period. In particular, the adaptation portion 214 may be configured to determine, in response to the low level of variation in observed light level during the first portion of the adaptation period, the target light level on basis of the average observed light level during the second portion of the adaptation period, and to determine, in response to the high level of variation in observed light level during the first portion, the target light level on basis of a minimum observed light level during the second portion of the adaptation period. Along similar lines, e.g. the control parameter(s) controlling the speed of adjustment and/or the control parameter limiting the minimum allowed light intensity may be in dependence of the extent of variation in the observed light level during the first portion of the adaptation period.

The adaptation portion 214 may be configured to also set or determine values of control parameters other than the target light level and/or control parameters controlling the speed and extent of light level adjustment in dependence of the variation in observed light level during the adaptation period.

As described hereinbefore, the sensory information obtained by the sensor portion 212 may comprise presence information indicative of a presence of a person or persons in the area served by the light source 240 for the PIR sensor 230. As further described hereinbefore, during the adaptation period the control portion 216 may be configured to switch the light source 240 on or off in accordance with the presence information, possibly with applying the switch-off delay before switching the light source 240 off in response to the presence information changing from a state indicating presence of one or more persons into a state indicating no persons to be present.

The adaptation portion 214 may be configured to determine a dimming pattern to be applied by the control portion 216, after completion of the adaptation period, upon switching the light source 240 off. In particular, the adaptation portion 214 may be configured to determine the dimming pattern on basis of the extent of change in observed light level upon switching the light source on or off during the adaptation period. In the following, for clarity and brevity of description, the term on-off change is used to refer to change in observed light level upon switching the light source off and the term off-on change is used to refer to the change in observed light level upon switching the light source on.

In particular, the adaptation portion 214 may be configured to determine the extent of one or more on-off changes during the adaptation period and/or the extent of one or more off-on changes during the adaptation period and to derive one or more measures indicative of the extent of change in observed light level upon switching the light source on or off during the adaptation period. While the one or more measures may be based on both on-off changes and off-on changes, the one or more measures are preferably derived on basis of the on-off changes only in order to avoid e.g. a light source that does not provide the desired light intensity in full immediately after having been switched on distorting the one or more measures. Moreover, relying on on-off changes avoids the need to constantly monitor the observed light level also during off-periods in order to have the information indicating the observed light level before switching the light source 240 on.

A measure regarding an on-off change may be derived on basis of the difference between the observed light level before switching the light source 240 off and after switching the light source 240 off. The observed light levels in this regard may be the instantaneous light levels just before and just after switching the light source 240 off. However, in order to avoid e.g. short-term disturbances in the light source 240 behavior or external surges of light entering the area disturbing the evaluation, the observed light levels in this regard comprise the observed light level averaged over an averaging period of predefined duration immediately preceding the moment of switching off the light source 240 the observed light level averaged over the averaging period immediately following the moment of switching the light source 240 off. The averaging period in this regard may be, for example, in the range from 5 seconds to 1 minute, e.g. 30 seconds. An averaging period closer to the lower end of said range, e.g. 10 seconds, may be applied especially in case a variable switch-off delay described hereinbefore is applied. Similar approach may be applied in derivation of the measure(s) regarding the off-on changes.

As described hereinbefore, the adaptation portion 214 may be configured to cause the control portion 216 to operate the light source 240 at a constant light intensity, e.g. at the first predetermined light intensity, throughout the adaptation period or, alternatively, the adaptation portion 214 may be configured to cause the control portion 216 to operate the light source 240 at different light intensities during a first portion and a second portion of the adaptation period, e.g. at the first predetermined light intensity during the first portion and at the second or third predetermined light intensity during the second portion.

In case the same light intensity is applied throughout the adaptation period, the one or more measures indicative of the extent of change in observed light level upon switching the light source on or off may be determined on basis of any sub-portion of the adaptation period, e.g. over the adaptation period in full. On the other hand, in case the adaptation period is divided into first and second portions of different light intensity where during the first portion the high (e.g. maximum) light intensity of the light source 240 is employed, the one or more measures indicative of the extent of change in observed light level upon switching the light source on or off are preferably be determined on basis of the first portion in full or on basis of a selected sub-portion of the first portion. As further example, in case the adaptation period involves the first and second portions of different light intensity, the one or more measures may be derived on basis of the both portions or sub-portions thereof, provided that suitable scaling in dependence of the light intensity applied during the first portion and the light intensity applied during the second portion is applied in order to compensate for the differences in absolute light intensity between the two portions.

Consequently, the adaptation portion 214 may be configured to select one of a plurality of predetermined dimming patterns in dependence of the one or more measures indicative of the extent of change in observed light level upon switching the light source 240 on or off during the adaptation period.

In particular, the adaptation portion 214 may be configured to evaluate whether the one or more measures indicative of the extent of change indicate a low level of change or a high level of change and to select, in response to the low level of change, a first predetermined dimming pattern and to select, in response to a high level of change, a second predetermined dimming pattern. Examples of predetermined dimming patterns are provided hereinafter. In this regard, the low level of change may be considered to indicate presence of other light sources and/or luminaires within or close to the area served by the light source 240 and/or the luminaire 250, whereas the high level of change may be considered as an indication of the light source 240 and/or the luminaire 250 to be the only light source or luminaire serving the area or nearby areas. Consequently, the one or more control parameters in this regard may be determined such that in case there are also other light sources and/or luminaires serving the area the dimming pattern is set to result in switching the light source 240 off after a relatively long period of time while in case the light source 240 and/or the luminaire 250 is the only one serving the are the dimming pattern is set to result in switching the light source 240 off after a relatively short period of time.

The distinction between the high level of change and the low level of change may be evaluated on basis of a predetermined criterion. In this regard, the one or more measures indicative of the extent of change in observed light level upon switching the light source on or off may comprise, for example, a plurality of such measures, each indicating the percentage the light level after switching the light source 240 off (or before switching the light source 240 on) compared to the light level before switching the light source 240 off (or after switching the light source 240 on), and the predetermined criterion may comprise at least a predetermined portion of the measures indicating said percentage to exceed a predetermined threshold. Consequently, in case the predetermined criterion is met, the plurality of measures are considered to indicate the low level of change, whereas failing to meet the predetermined criterion is considered as an indication of the high level of change. The predetermined threshold in this regard may be, for example, in the range from 10 % to 30 %, e.g. 20 %. The predetermined portion may be e.g. 50 %, while a higher or lower value may be used in order to bias the selection towards the high or low level of change, respectively.

As another example, a single measure may be employed, the single measure being derived as the percentage of the average light level after switching the light source 240 off (or before switching the light source 240 on) compared to the average light level before switching the light source 240 off (or after switching the light source 240 on), and the predetermined criterion may comprise said percentage exceeding a predetermined threshold. As in the previous example, the single measure meeting the predetermined criterion indicates the low level of change whereas a failure to meet the predetermined criterion is considered as an indication of the high level change.

Both the first and the second predetermined dimming patterns may be defined, for example, by a first period of time during which the light intensity of the light source 240 is kept at the current level, e.g. at the level adjusted by the control portion in accordance with the prevailing observed light level and the target light level, followed by a second period of time during which the light intensity is gradually adjusted from the current light intensity to a predetermined low light intensity, and further followed by a third period of time during which the light intensity is kept at the predetermined low intensity and after which the light source 240 is switched off.

Preferably, the first period of time is the same or essentially the same for the first and the second predetermined dimming patterns, whereas the second period of time for the first predetermined dimming pattern is longer than or equal to that of the second predetermined dimming pattern. Moreover, the third period of time for the first predetermined dimming pattern is preferably substantially longer than that of the second predetermined dimming pattern. As examples, the first period of time may be in the range from 5 to 20 minutes, e.g. 10 minutes, the second period of time for the first predetermined dimming pattern may be in the range from 10 to 25 minutes, e.g. 20 minutes while the second period of time for the second predetermined dimming pattern may be in the range from 10 to 20 minutes, e.g. 15 minutes. Moreover, the third period of time for the first predetermined dimming pattern may be in the range from 90 to 150 minutes, e.g. 120 minutes, whereas the third period of time for the second predetermined dimming pattern may be in the range from 10 to 20 minutes, e.g. 15 minutes.

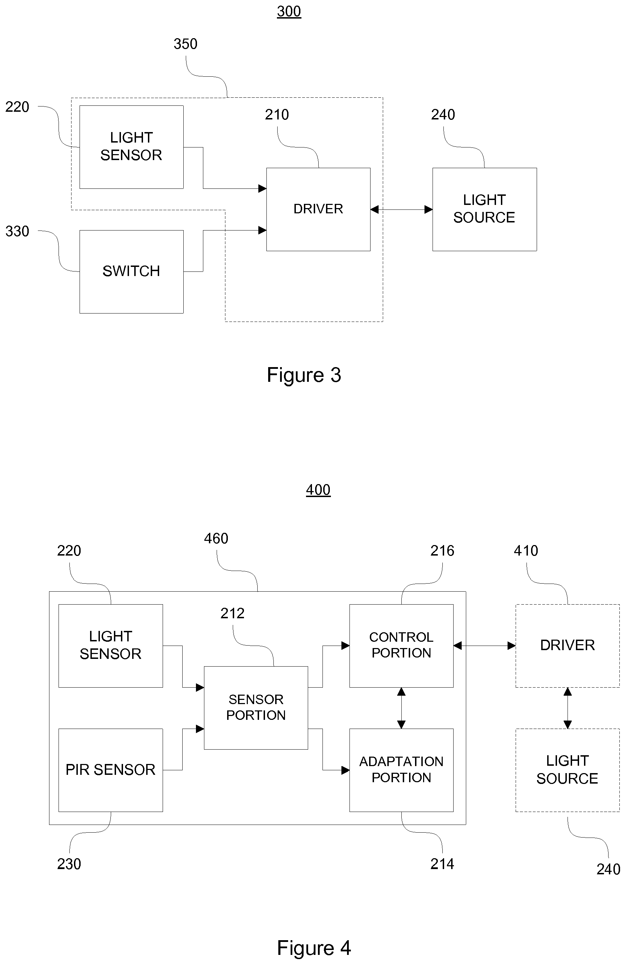

In an alternative arrangement 300, schematically illustrated in Figure 3, the PIR sensor 230 is omitted and the arrangement comprises a user-operable switch 330 connected or coupled to the driver 210, which user-operable switch 330 may be used to provide a signal that causes the control portion 216 to switch the light source 240 on or off. In other words, instead of using the sensor signal originating from the PIR sensor 230 the on/off state of the light source 240 is controlled on basis of user action.

Consequently, in context of the arrangement 300 the sensor portion 212 is only configured to receive sensory information comprising information indicative of observed light level and the control portion 216 is only configured to control operation of the light source 240 and/or the luminaire 350 in accordance with the information indicative of observed light level and in accordance with the one or more control parameters. Moreover, in context of the arrangement 300 the adaptation portion 214 is only configured to determine the one or more control parameters for the control portion 216 for adjustment of the light intensity.

Instead of providing the sensory portion 212, the adaptation portion 214 and the control portion 216 as components of portions of the driver 210 provided in a driver apparatus, these portions may be provided in a sensor unit or a sensor module 460, as schematically illustrated by the arrangement 400 depicted in Figure 4. The operations, procedures and/or functions assigned to the sensor portion 212, to the adaptation portion 214 and to the control portion 216 in context of the arrangement 400 are similar to those described hereinbefore in context of the driver 210 and/or the arrangement 100. Hence, the difference in comparison to the arrangement 100 and to the driver 210 is that in accordance with the arrangement 400 the sensor unit or the sensor module 460 provides the control of the light source 240 via the driver 410 in accordance with the sensory information and in accordance with one or more control parameters and the (self-)adaptation of the one or more control parameters on basis of observed light level during the adaptation period. Although the arrangement 400 is illustrated with both the light sensor 220 and the PIR sensor 230, a variation of the arrangement with the PIR sensor 230 replaced with the user-operable switch as described in context of the arrangement 300 is equally applicable to the arrangement 400.

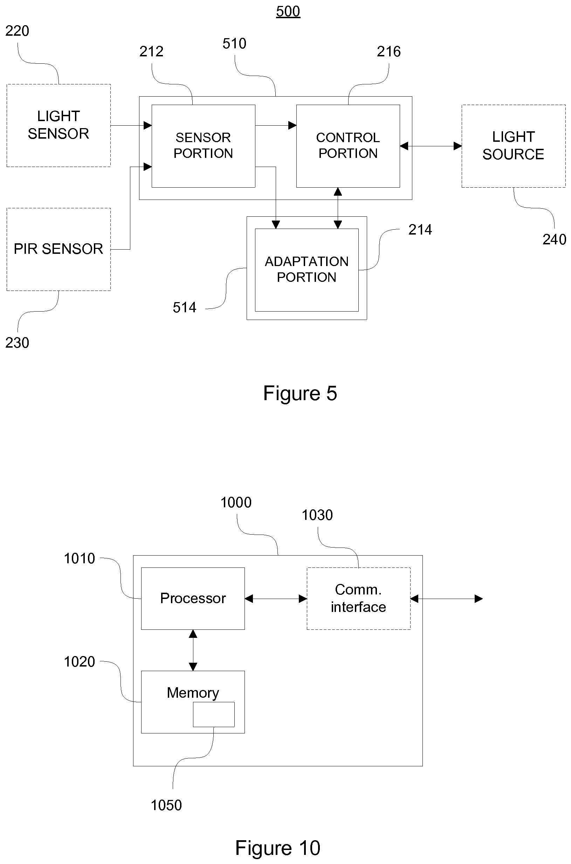

Another variation of providing the sensory portion 212, the adaptation portion 214 and the control portion 216 as components of portions of the driver 210 provided in a driver apparatus, is to provide the adaptation portion 214 in a separate adaptation module 514 connectable to a driver 510 comprising the sensory portion 212 and the control portion 216, the driver 510 provided e.g. in a driver apparatus, as schematically illustrated in by arrangement 500 depicted in Figure 5. The operations, procedures and/or functions assigned to the sensor portion 212, to the adaptation portion 214 and to the control portion 216 in context of the arrangement 500 are similar to those described hereinbefore in context of the driver 210 and/or the arrangement 100. Hence, the difference in comparison to the arrangement 100 and to the driver 210 is that in accordance with the arrangement 500 the adaptation module 514 provides the (self-)adaptation of the one or more control parameters on basis of observed light level during the adaptation period. Although the arrangement 500 is illustrated with both the light sensor 220 and the PIR sensor 230, a variation of the arrangement with the PIR sensor 230 replaced with the user-operable switch as described in context of the arrangement 300 is equally applicable to the arrangement 500.

The operations, procedures and/or functions assigned to the structural units described in the context of the driver 210, e.g. to the sensor portion 212, to the adaptation portion 214 and to the control portion 216 may be divided between these portions in a different manner. Moreover, there may be further portions or units that are configured to perform some of the operations, procedures and/or functions assigned to the sensor portion 212, to the adaptation portion 214 and/or to the control portion 216 as described hereinbefore. On the other hand, the operations, procedures and/or functions assigned to the sensor portion 212, to the adaptation portion 214 and to the control portion 216 may be assigned to a single portion or to a single unit within the driver 210 or within the sensor unit 460.

In particular, the driver 210 may be provided as a driver apparatus for driving a light source of a luminaire or the sensor unit or sensor module 460 may be provided as a sensor apparatus for driving a light source of a luminaire, the driver apparatus or the sensor apparatus comprising means for obtaining sensory information comprising information indicative of observed light level in an area served by the luminaire, means for controlling operation of the luminaire in accordance with the sensory information and in accordance with one or more control parameters, and means for determining the one or more control parameters, the determination comprising initiating an adaptation period in response to a request thereto and determining values for the one or more control parameters on basis of observed light level during the adaptation period.

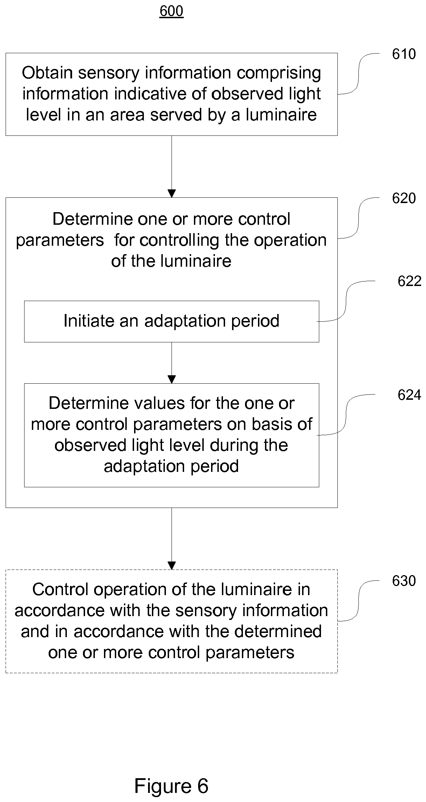

At least some of the operations, procedures and/or functions assigned to the structural units described in the context of the driver 210, e.g. to the sensor portion 212, to the adaptation portion 214 and to the control portion 216 may be provided as steps of a method. As an example of this regard, Figure 6 illustrates a method 600 for determining one or more control parameters for controlling operation of a light source 240 of a luminaire 250. The method 600 may be implemented e.g. by a driver apparatus, by a sensor apparatus or a sensor module, or jointly by two or more of a driver apparatus, a sensor apparatus/module and an adaptation module.

The method 600 comprises obtaining sensory information comprising information indicative of observed light level in an area served by the light source 240 and/or the luminaire 250, as indicated in block 610. The sensory information may further comprise presence information indicative of presence of a person in the area served by the luminaire, as described hereinbefore in context of the sensor portion 212.

The method 600 further comprises determining one or more control parameters useable for controlling the operation of the light source 240 in accordance with the sensory information and in accordance with the one or more control parameters, as indicated in block 620. The determination comprises initiating an adaptation period in response to a request, as indicated in sub-block 622, and determining values for the one or more control parameters on basis of observed light level during the adaptation period, as indicated in sub-block 624. The adaptation period may comprise one or more consecutive periods of the light source being switched on, the combined duration of the one more periods resulting in a predetermined overall duration, as described hereinbefore in context of the adaptation portion 214. When the light source 240 is being switched on, it may be operated at a predetermined light intensity during the adaptation period regardless of the information indicative of observed light level, as described hereinbefore in context of the adaptation portion 214. The determination of the values for the one or more control parameters may comprise determining a value for one or more of the target light level, the speed of adjustment of the light level and the minimum or maximum allowed light intensity in accordance with the extent of variation of the observed light level during the adaptation period, as described hereinbefore in context of the adaptation portion 214. Exemplifying methods in this regard are described hereinafter.

The method 600 may further comprise determination of a dimming pattern on basis of extent of change in observed light level upon switching the light source 240 on or off during the adaptation period, wherein the adaptation portion is configured to determine said extent of change as the difference between the observed light level before switching the light source 240 on/off and after switching the light source 240 on/off, as described in more detail hereinbefore in context of the adaptation portion 214. An exemplifying method in this regard is described hereinafter.

The method 600 may further comprise controlling operation of the luminaire, after completion of the adaptation period, in accordance with the sensory information and in accordance with the determined one or more control parameters, as indicated in block 630. If the controlling indicated in block 630 is included in the method, the method 600 may be, alternatively, viewed as a method for driving the light source 240 of the luminaire 250. This controlling may comprise, for example, adjust the light intensity of the light source in accordance with the observed light level and in accordance with the target light level and with possible further control parameters controlling the speed and extent of the adjustment, as described hereinbefore in context of the adaptation portion 214. The controlling may further comprise switching, during the adaptation period, the light source on or off in accordance with the presence information and switching, after completion of the adaptation period, the light source 240 off via the dimming pattern, as described hereinbefore in context of the control portion 216.

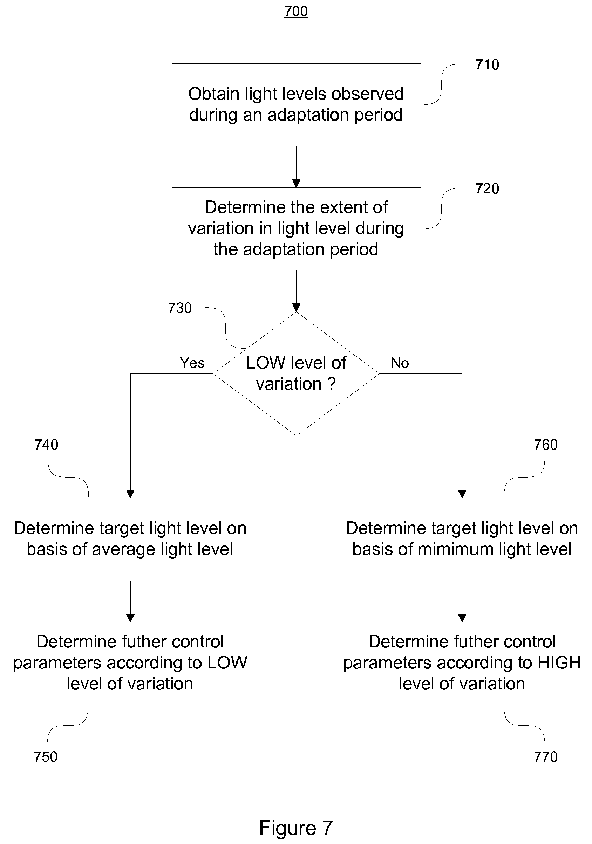

Figure 7 illustrates an exemplifying method 700 for determining or adapting the one or more control parameters for controlling operation of the light source 240 of the luminaire 250. The method 700 commences from obtaining information indicative of observed light level in an area served by the light source 240 and/or the luminaire 250 during the adaptation period, as indicated in block 710. The observed light levels are based on operating the light source 240 at the first predetermined light intensity throughout the adaptation period. The method 700 further comprises determining the extent of variation of the observed light level during the adaptation period, as indicated in block 720.

In block 730 a determination whether the extent of variation meets the criteria for being classified as the low level of variation is made, and in response to the extent of variation meeting the criteria the target light level is determined on basis of the average observed light level during the adaptation period, as indicated in block 740. The determination of the target light level on basis of the average observed light level relies on scaling the observations based on the first predetermined light intensity or intermediate parameters derived therefrom into the second predetermined light intensity and determining the target light level on basis of the scaled observed light levels or the scaled intermediate parameters. In this regard, the second predetermined light intensity is lower than the first predetermined light intensity. From block 740 the method 700 may further proceed into block 750 to determine possible further control parameters, e.g. parameters controlling the speed of light intensity adaptation and/or minimum and/or maximum allowed light intensity, that are considered suitable for an operating environment exhibiting the low level of variation in observed light level.

In case the determination in block 730 indicates the extent of variation failing to meet the criteria for classification as the low level of variation, the extent of variation is considered to be high and the method 700 proceeds into block 760 to determine the target light level on basis of the minimum observed light level during the adaptation period. The determination of the target light level on basis of the minimum observed light level relies on scaling the observations based on the first predetermined light intensity or intermediate parameters derived therefrom into the third predetermined light intensity and determining the target light level on basis of the scaled observed light levels or the scaled intermediate parameters. In this regard, the third predetermined light intensity is lower than the second predetermined light intensity. From block 760 the method 700 may further proceed to block 770 to determine possible further control parameters, e.g. parameters controlling the speed of light intensity adaptation and/or minimum and/or maximum allowed light intensity, that are considered suitable for an operating environment exhibiting the high level of variation in observed light level.

Exemplifying approaches for more detailed description regarding operations, procedures and/or functions within blocks 710 to 770 of the method 700 is provided hereinbefore in context of the sensor portion 212 and the adaptation portion 214.

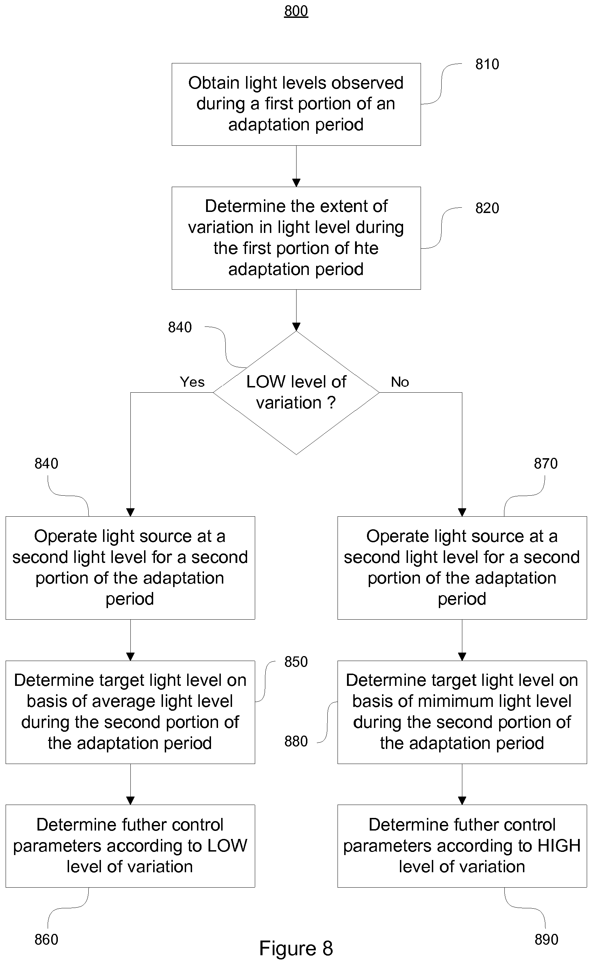

Figure 8 illustrates an exemplifying method 800 for determining or adapting the one or more control parameters for controlling operation of the light source 240 of the luminaire 250. The method 800 commences from obtaining information indicative of observed light level in an area served by the light source 240 and/or the luminaire 250 during a first portion the adaptation period, as indicated in block 810. The observed light levels are based on operating the light source 240 at the first predetermined light intensity throughout the first portion of the adaptation period. The method 800 further comprises determining the extent of variation of the observed light level during the first portion of the adaptation period, as indicated in block 820.

In block 830 a determination whether the extent of variation meets the criteria for being classified as the low level of variation is made, and in response to the extent of variation meeting the criteria the light source 240 is operated at the second predetermined light intensity throughout the second portion of the adaptation period, as indicated in block 840. Consequently, the target light level is determined on basis of the average observed light level during the second portion of the adaptation period, as indicated in block 850, and the method 800 may proceed to block 860 to determine possible further control parameters, e.g. parameters controlling the speed of light intensity adaptation and/or minimum and/or maximum allowed light intensity, that are considered suitable for an operating environment exhibiting the low level of variation.

In case the determination in block 830 indicates the extent of variation failing to meet the criteria for classification as the low level of variation, the extent of variation is considered to be high and the method 800 proceeds to block 870 to operate the light source 240 at the third predetermined light intensity throughout the second portion of the adaptation period. Consequently, the target light level is determined on basis of the minimum observed light level during the second portion of the adaptation period, as indicated in block 880. From block 880 the method 800 may further proceed to block 890 to determine possible further control parameters, e.g. parameters controlling the speed of light intensity adaptation and/or minimum and/or maximum allowed light intensity, that are considered suitable for an operating environment exhibiting the high level of variation in observed light level.

Exemplifying approaches for more detailed description regarding operations, procedures and/or functions within blocks 810 to 890 of the method 800 is provided hereinbefore in context of the sensor portion 212 and the adaptation portion 214.

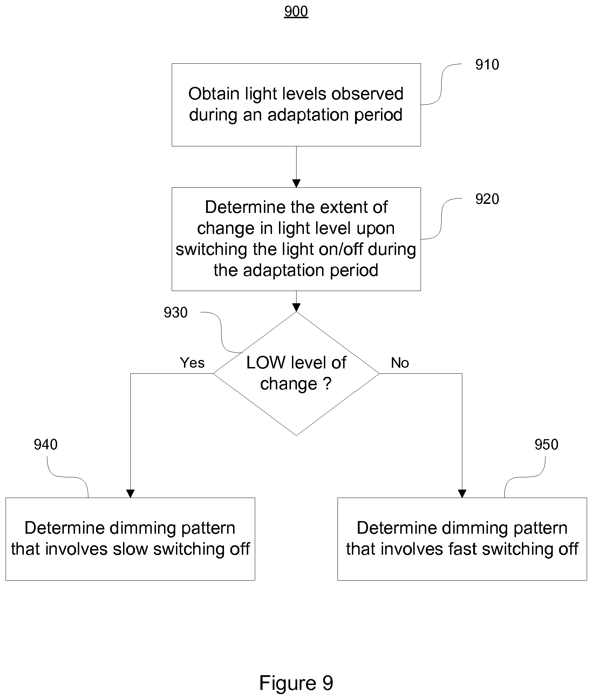

Figure 9 illustrates an exemplifying method 900 for adapting the one or more control parameters for controlling operation of the light source 240 of the luminaire 250. The method 900 commences from obtaining information indicative of observed light level in an area served by the light source 240 and/or the luminaire 250 during the adaptation period or only during the first portion thereof, as indicated in block 910. The observed light levels are based on operating the light source 240 at the first predetermined light intensity. The method 900 further comprises determining the extent of change in light level upon switching the light source 240 on or off during the adaptation period or during the first portion thereof, as indicated in block 920.

In block 930 a determination whether the extent of change meets the criteria for being classified as the low level of change is made, and in response to the extent of variation meeting the criteria a dimming pattern that involves dimming down and switching the light source 240 after a relatively long period of time is selected, e.g. the first predetermined dimming pattern described hereinbefore, as indicated in block 940. In contrast, in case the determination in block 930 indicates the extent of change failing to meet the criteria for classification as the low level of change, the extent of change is considered to be high and the method 900 proceeds to block 950 to select a dimming pattern that involves dimming down and switching the light source 240 after a relatively short period of time, e.g. the second predetermined dimming pattern described hereinbefore.

Exemplifying approaches for more detailed description regarding operations, procedures and/or functions within blocks 910 to 950 of the method 900 is provided hereinbefore in context of the sensor portion 212 and the adaptation portion 214.

Figure 10 schematically illustrates an exemplifying apparatus 1000 that may be employed for embodying the driver 210, the sensor module 460, the adaptation module 514 or one or more portions thereof. The apparatus 1000 comprises a processor 1010 and a memory 1020, the processor 1010 being configured to read from and write to the memory 1020. The apparatus 1000 may further comprise a communication interface 1030 for enabling communication with another apparatuses. The apparatus 1000 may comprise further components not illustrated in the example of Figure 10.

Although the processor 1010 is illustrated as a single component, the processor 1010 may be implemented as one or more separate components. Although the memory 1020 is illustrated as a single component, the memory 1020 may be implemented as one or more separate components, some or all of which may be integrated/removable and/or may provide permanent/semi-permanent/ dynamic/cached storage.

The apparatus 1000 may be embodied as a special-purpose or as a general purpose device with a sufficient processing capacity. Preferably, however, the apparatus 1000 is embodied as an apparatus dedicated for operating as the the driver 210, as the sensor module 460, as the adaptation module 514 or as one or more portions thereof.

The memory 1020 may store a computer program 1050 comprising computer-executable instructions that control the operation of the apparatus 1000 when loaded into the processor 1010 and executed by the processor 1010. As an example, the computer program 1050 may include one or more sequences of one or more instructions. The computer program 1050 may be provided as a computer program code. The processor 1010 is able to load and execute the computer program 1050 by reading the one or more sequences of one or more instructions included therein from the memory 1020. The one or more sequences of one or more instructions may be configured to, when executed by one or more processors, cause an apparatus, for example the apparatus 1000, to implement the operations, procedures and/or functions described hereinbefore in context of the driver 210, the sensor module 460 or the adaptation module 514.

Hence, the apparatus 1000 may comprise at least one processor 1010 and at least one memory 1020 including computer program code for one or more programs, the at least one memory 1020 and the computer program code configured to, with the at least one processor 1010, cause the apparatus 1000 to perform the operations, procedures and/or functions described hereinbefore in context of the driver 210, the sensor module 460 or the adaptation module 514.

The computer program 1050 may be provided independently of the apparatus, and the computer program 1050 may be provided at the apparatus 1000 via any suitable delivery mechanism. As an example, the delivery mechanism may comprise at least one computer readable non-transitory medium having program code stored thereon, the program code which when executed by an apparatus cause the apparatus at least implement processing to carry out the operations, procedures and/or functions described hereinbefore in context of the driver 210, the sensor module 460 or the adaptation module 514. The delivery mechanism may be for example a computer readable storage medium, a computer program product, a memory device a record medium such as a CD-ROM, a DVD a Blue-ray Disc, a corresponding optical media, an article of manufacture that tangibly embodies the computer program 1050, etc. As a further example, the delivery mechanism may be a signal configured to reliably transfer the computer program 1050.

Reference to a processor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

## Claims

1. An apparatus (210, 250, 350, 460) for driving a light source (240) of a luminaire, the apparatus comprising
a sensor portion (212) configured to obtain sensory information comprising information indicative of observed light level in an area served by the luminaire;
a control portion (216) configured to control operation of the light source in accordance with the sensory information and in accordance with one or more control parameters; and
an adaptation portion (214) for determining the one or more control parameters, the adaptation portion configured to
initiate (622) an adaptation period in response to a request thereto, and determine (624) values for the one or more control parameters on basis of observed light level during the adaptation period;
**characterized in that** the adaptation portion (214) is configured to determine (940, 950) a dimming pattern on basis of observed light level during the adaptation period, and the control portion (216) is configured to, after the adaptation period, employ said dimming pattern in switching off said light source (240).

2. An apparatus according to claim 1, wherein the adaptation period comprises one or more consecutive periods of the light source being switched on, the combined duration of the one more periods resulting in a predetermined overall duration.

3. An apparatus according claim 1 or 2, wherein the control portion (216) is configured to operate the light source (240) at a first predetermined light intensity during the adaptation period regardless of the information indicative of observed light level.

4. An apparatus according to any preceding claim, wherein the one or more control parameters comprise a target light level and wherein the control portion (216) is configured to adjust the light intensity of the light source (240) in accordance with the observed light level and said target light level, and wherein the adaptation portion (214) is configured to determine one or more of the target light level, the speed of adjustment and the minimum allowed light intensity in accordance with the extent of variation of the observed light level during the adaptation period.

5. An apparatus according to claim 4, wherein the adaptation portion (214) is configured to
determine (740), in response to the extent of variation of the observed light level during the adaptation period meeting a predetermined criterion, the target light level on basis of the average observed light level during the adaptation period, and
determine (760), in response to the variation of the observed light level during the adaptation period failing to meet said predetermined criterion, the target light level on basis of the minimum observed light level during the adaptation period.

6. An apparatus according to claim 4 or 5, wherein the adaptation portion (214) is configured to
set, in response to the extent of variation of the observed light level during the adaptation period meeting a predetermined criterion, the adjustment speed towards higher light intensity to be faster than towards lower light intensity and/or to set the minimum allowed light intensity according to a predetermined minimum intensity, and
set, in response to the variation of the observed light level during the adaptation period failing to meet said predetermined criterion, the adjustment speed towards higher light intensity to be the same as towards lower light intensity.

7. An apparatus according to any of claims 4 to 6, wherein said extent of variation of the observed light level is indicated by the difference between a maximum observed light level and a minimum observed light level during the adaptation period.

8. An apparatus according to claim 7, wherein the observed light level is indicated as a sequence of light levels averaged over an averaging period of a predetermined duration with the sequence of light levels covering the duration of the adaptation period, wherein the minimum observed light level represents the lowest averaged light level of the sequence, and wherein the maximum observed light level represents the highest averaged light level of the sequence.

9. An apparatus according to any preceding claim, wherein the apparatus is an electrical ballast for driving a fluorescent lamp, a driver apparatus for driving a light emitting diode or a sensor apparatus.

10. An apparatus according to any of claims 1 to 9,
wherein the sensory information further comprises presence information indicative of presence of a person in the area served by the luminaire and wherein, during the adaptation period, the control portion (216) is configured to switch the light source (240) on or off in accordance with the presence information,
wherein the adaptation portion (214) is configured to determine a dimming pattern on basis of extent of change in observed light level upon switching the light source (240) on or off during the adaptation period, and
wherein, after completion of the adaptation period, the control portion (216) is configured to switch the light source (240) off via said dimming pattern.

11. An apparatus according to claim 10,
wherein the adaptation portion (214) is configured to, in response to said extent of change meeting a second predetermined criterion, select a dimming pattern that involves switching off the light source (240) after a first period of time of the presence information not indicating a presence of a person in the area, and
wherein the adaptation portion (214) is configured to, in response to said extent of change failing to meet the second predetermined criterion, select a dimming pattern that involves switching off the light source (240) after a second period of time of the presence information not indicating a presence of a person in the area, which second period of time is shorter than the first period of time.

12. An apparatus according to claim 10 or 11, wherein the adaptation portion (214) is configured to determine said extent of change as the difference between the observed light level before switching the light source on/off and after switching the light source (240) on/off.

13. An apparatus according to claim 12,
wherein said observed light level before switching the light source (240) on/off is determined as light level averaged over a period of predetermined duration immediately preceding the moment of switching the light source (240) on/off, and
wherein said observed light level after switching the light source (240) on/off is determined as light level averaged over a period of predetermined duration immediately following the moment of switching the light source (240) on/off.

14. An apparatus according to any preceding claim, wherein the control portion (216) is configured to request the adaptation portion (214) to initiate the adaptation period in response to the activation of the apparatus.

15. An apparatus according to any preceding claim, wherein the control portion (216) is configured to request the adaptation portion (214) to initiate the adaptation period in response to the observed light level falling below a predefined threshold for a period exceeding a predefined duration while the light source (240) is being switched on.

16. A method for determining one or more control parameters for controlling operation of a light source (240) of a luminaire, the method comprising obtaining (610) sensory information comprising information indicative of observed light level in an area served by the luminaire; and
determining (620) the one or more control parameters, for controlling operation of the light source (240) in accordance with the sensory information and in accordance with the determined one or more control parameters, the determination comprising
initiating (622) an adaptation period in response to a request thereto,
determining (624) values for the one or more control parameters on basis of observed light level during the adaptation period, and
determining (940, 950) a dimming pattern on basis of observed light level during the adaptation period for use in switching off said light source (240) after the adaptation period.

17. A computer program for determining one or more control parameters for controlling operation of a light source (240) of a luminaire, the computer program including one or more sequences of one or more instructions which, when executed by one or more processors, cause an apparatus to at least perform the following:
obtain (610) sensory information comprising information indicative of observed light level in an area served by the luminaire; and
determine (620) one or more control parameters, for controlling operation of the light source (240) in accordance with the sensory information and in accordance with the determined one or more control parameters, the determination comprising
initiating (622) an adaptation period in response to a request thereto,
determining (624) values for the one or more control parameters on basis of observed light level during the adaptation period, and
determining (940, 950) a dimming pattern on basis of observed light level during the adaptation period for use in switching off said light source (240) after the adaptation period.

## Patentansprüche

1. Vorrichtung (210, 250, 350, 460) zum Ansteuern einer Lichtquelle (240) einer Leuchte, wobei die Vorrichtung Folgendes umfasst:
einen Sensorteil (212), der konfiguriert ist, sensorische Informationen zu erhalten, die Informationen umfassen, die eine in einem Bereich, der durch die Leuchte bedient wird, beobachtete Lichtstärke anzeigen;
einen Steuerteil (216), der konfiguriert ist, den Betrieb der Lichtquelle in Übereinstimmung mit den sensorischen Informationen und in Übereinstimmung mit einem oder mehreren Steuerparametern zu steuern; und
einen Anpassungsteil (214) zum Bestimmen des einen oder der mehreren Steuerparameter, wobei der Anpassungsteil konfiguriert ist zum
Initiieren (622) eines Anpassungszeitraums als Antwort auf eine Anforderung für diesen und
Bestimmen (624) von Werten für den einen oder die mehreren Steuerparameter auf der Grundlage einer während des Anpassungszeitraums beobachteten Lichtstärke;
**dadurch gekennzeichnet, dass** der Anpassungsteil (214) konfiguriert ist, ein Verdunklungsmuster auf der Grundlage einer während des Anpassungszeitraums beobachteten Lichtstärke zu bestimmen (940, 950), und der Steuerteil (216) konfiguriert ist, das Verdunklungsmuster nach dem Anpassungszeitraum beim Ausschalten der Lichtquelle (240) einzusetzen.

2. Vorrichtung nach Anspruch 1, wobei der Anpassungszeitraum eine oder mehrere aufeinanderfolgende Zeiträume umfasst, in denen die Lichtquelle eingeschaltet wird, wobei die kombinierte Dauer des einen oder der mehreren Zeiträume eine vorgegebene Gesamtdauer ergibt.

3. Vorrichtung nach Anspruch 1 oder 2, wobei der Steuerteil (216) konfiguriert ist, die Lichtquelle (240) während des Anpassungszeitraums ohne Rücksicht auf die Informationen, die eine beobachtete Lichtstärke anzeigen, bei einer ersten vorgegebenen Lichtintensität zu betreiben.

4. Vorrichtung nach einem vorhergehenden Anspruch, wobei der eine oder die mehreren Steuerparameter eine Solllichtstärke umfassen, und wobei der Steuerteil (216) konfiguriert ist, die Lichtintensität der Lichtquelle (240) in Übereinstimmung mit der beobachteten Lichtstärke und der Solllichtstärke anzupassen, und der Anpassungsteil (214) konfiguriert ist, die Solllichtstärke und/oder die Anpassungsgeschwindigkeit und/oder die minimal zulässige Lichtintensität in Übereinstimmung mit dem Ausmaß der Schwankung der während des Anpassungszeitraums beobachteten Lichtstärke zu bestimmen.

5. Vorrichtung nach Anspruch 4, wobei der Anpassungsteil (214) konfiguriert ist zum
Bestimmen (740) der Solllichtstärke auf der Grundlage der mittleren während des Anpassungszeitraums beobachteten Lichtstärke als Antwort darauf, dass das Ausmaß der Schwankung der während des Anpassungszeitraums beobachteten Lichtstärke ein vorgegebenes Kriterium erfüllt, und
Bestimmen (760) der Solllichtstärke auf der Grundlage der minimalen während des Anpassungszeitraums beobachteten Lichtstärke als Antwort darauf, dass die Schwankung der während des Anpassungszeitraums beobachteten Lichtstärke das vorgegebene Kriterium nicht erfüllt.

6. Vorrichtung nach Anspruch 4 oder 5, wobei der Anpassungsteil (214) konfiguriert ist zum
Einstellen der Anpassungsgeschwindigkeit zu höherer Lichtintensität schneller als zu niedrigerer Lichtintensität und/oder Einstellen der minimalen zulässigen Lichtintensität in Übereinstimmung mit einer vorgegebenen minimalen Intensität als Antwort darauf, dass das Ausmaß der Schwankung der während des Anpassungszeitraums beobachteten Lichtstärke ein vorgegebenes Kriterium erfüllt, und
Einstellen der Anpassungsgeschwindigkeit zu höherer Lichtintensität auf dieselbe wie zu niedrigerer Lichtintensität als Antwort darauf, dass die Schwankung der während des Anpassungszeitraums beobachteten Lichtstärke das vorgegebene Kriterium nicht erfüllt.

7. Vorrichtung nach einem der Ansprüche 4 bis 6, wobei das Ausmaß der Schwankung der beobachteten Lichtstärke durch die Differenz zwischen einer maximalen beobachteten Lichtstärke und einer minimalen während des Anpassungszeitraums beobachteten Lichtstärke angegeben wird.

8. Vorrichtung nach Anspruch 7, wobei die beobachtete Lichtstärke als eine Folge von Lichtstärken, die über einen Mittelungszeitraum einer vorgegebenen Dauer gemittelt ist, angegeben wird, wobei die Folge von Lichtstärken die Dauer des Anpassungszeitraums abdeckt, die minimale beobachtete Lichtstärke die geringste gemittelte Lichtstärke der Folge repräsentiert und die maximale beobachtete Lichtstärke die höchste gemittelte Lichtstärke der Folge repräsentiert.

9. Vorrichtung nach einem vorhergehenden Anspruch, wobei die Vorrichtung ein elektrisches Vorschaltgerät zum Ansteuern einer Leuchtstofflampe, eine Ansteuervorrichtung zum Ansteuern einer Leuchtdiode oder eine Sensorvorrichtung ist.

10. Vorrichtung nach einem der Ansprüche 1 bis 9, wobei
die sensorischen Informationen ferner Anwesenheitsinformationen umfassen, die die Anwesenheit einer Person in dem Bereich, der durch die Leuchte bedient wird, anzeigen und der Steuerteil (216) konfiguriert ist, während des Anpassungszeitraums die Lichtquelle (240) in Übereinstimmung mit den Anwesenheitsinformationen ein- oder auszuschalten, und
der Anpassungsteil (214) konfiguriert ist, das Verdunklungsmuster auf der Grundlage des Ausmaßes einer Änderung der beobachteten Lichtstärke aufgrund des Ein- oder Ausschaltens der Lichtquelle (240) während des Anpassungszeitraums zu bestimmen.

11. Vorrichtung nach Anspruch 10, wobei
der Anpassungsteil (214) konfiguriert ist, als Antwort darauf, dass das Ausmaß der Änderung ein zweites vorgegebenes Kriterium erfüllt, das Verdunklungsmuster derart auswählt, dass es ein Ausschalten der Lichtquelle (240) umfasst, nachdem die Anwesenheitsinformationen für einen ersten Zeitraum keine Anwesenheit einer Person in dem Bereich angezeigt haben, und
der Anpassungsteil (214) konfiguriert ist, als Antwort darauf, dass das Ausmaß der Änderung ein zweites vorgegebenes Kriterium nicht erfüllt, das Verdunklungsmuster derart auswählt, dass es ein Ausschalten der Lichtquelle (240) umfasst, nachdem die Anwesenheitsinformationen für einen zweiten Zeitraum keine Anwesenheit einer Person in dem Bereich angezeigt haben, wobei der zweite Zeitraum kürzer ist, als der erste Zeitraum.

12. Vorrichtung nach Anspruch 10 oder 11, wobei der Anpassungsteil (214) konfiguriert ist, das Ausmaß der Änderung als die Differenz zwischen der beobachteten Lichtstärke vor dem Ein-/Ausschalten der Lichtquelle und nach dem Ein-/Ausschalten der Lichtquelle zu bestimmen.

13. Vorrichtung nach Anspruch 12, wobei
die beobachtete Lichtstärke vor dem Ein-/Ausschalten der Lichtquelle (240) als die über eine Frist von vorgegebener Dauer unmittelbar vor dem Ein-/Ausschaltmoment der Lichtquelle (240) gemittelte Lichtstärke bestimmt wird und
die beobachtete Lichtstärke nach dem Ein-/Ausschalten der Lichtquelle (240) als die über eine Frist von vorgegebener Dauer unmittelbar nach dem Ein-/Ausschaltmoment der Lichtquelle (240) gemittelte Lichtstärke bestimmt wird.

14. Vorrichtung nach einem vorhergehenden Anspruch, wobei der Steuerteil (216) konfiguriert ist, anzufordern, dass der Anpassungsteil (214) den Anpassungszeitraum als Antwort auf das Aktivieren der Vorrichtung initiiert.

15. Vorrichtung nach einem vorhergehenden Anspruch, wobei der Steuerteil (216) konfiguriert ist, anzufordern, dass der Anpassungsteil (214) den Anpassungszeitraum als Antwort darauf initiiert, dass die beobachtete Lichtstärke für einen Zeitraum, der eine vordefinierte Dauer überschreitet, unter einen vorgegebenen Schwellenwert fällt, während die Lichtquelle (240) eingeschaltet ist.

16. Verfahren zum Steuern des Betriebs einer Lichtquelle (240) einer Leuchte, wobei das Verfahren Folgendes umfasst:
Erhalten (610) sensorischer Informationen, die Informationen umfassen, die eine in einem Bereich, der durch die Leuchte bedient wird, beobachtete Lichtstärke anzeigen und
Steuern des Betriebs der Lichtquelle (240) in Übereinstimmung mit den sensorischen Informationen und in Übereinstimmung mit einem oder mehreren bestimmten Steuerparametern,
das Folgendes umfasst:
Initiieren (622) eines Anpassungszeitraums als Antwort auf eine Anforderung für diesen,
Bestimmen (624) von Werten für den einen oder die mehreren Steuerparameter auf der Grundlage einer während des Anpassungszeitraums beobachteten Lichtstärke und
Bestimmen (940, 950) eines Verdunklungsmusters auf der Grundlage einer während des Anpassungszeitraums beobachteten Lichtstärke zur Verwendung beim Ausschalten der Lichtquelle (240) nach dem Anpassungszeitraum.

17. Computerprogrammprodukt zum Steuern des Betriebs einer Lichtquelle (240) einer Leuchte, wobei das Computerprogramm eine oder mehrere Abfolgen von einer oder mehreren Anweisungen enthält, die, wenn sie durch einen oder mehrere Prozessoren ausgeführt werden, bewirken, dass eine Vorrichtung mindestens Folgendes durchführt:
Erhalten (610) sensorischer Informationen, die Informationen umfassen, die eine in einem Bereich, der durch die Leuchte bedient wird, beobachtete Lichtstärke anzeigen und
Steuern des Betriebs der Lichtquelle (240) in Übereinstimmung mit den sensorischen Informationen und in Übereinstimmung mit einem oder mehreren bestimmten Steuerparametern,
das Folgendes umfasst:
Initiieren (622) eines Anpassungszeitraums als Antwort auf eine Anforderung für diesen,
Bestimmen (624) von Werten für den einen oder die mehreren Steuerparameter auf der Grundlage einer während des Anpassungszeitraums beobachteten Lichtstärke und
Bestimmen (940, 950) eines Verdunklungsmusters auf der Grundlage einer während des Anpassungszeitraums beobachteten Lichtstärke zur Verwendung beim Ausschalten der Lichtquelle (240) nach dem Anpassungszeitraum.

## Revendications

1. Appareil (210, 250, 350, 460) pour exciter une source de lumière (240) d'un luminaire, l'appareil comprenant
une partie de capteur (212) configurée pour obtenir des informations sensorielles comportant des informations indiquant un niveau de lumière observé dans une zone desservie par le luminaire ;
une partie de commande (216) configurée pour commander le fonctionnement de la source de lumière en fonction des informations sensorielles et en fonction d'un ou de plusieurs paramètres de commande ; et
une partie d'adaptation (214) pour déterminer le ou les paramètres de commande, la partie d'adaptation étant configurée
pour initier (622) une période d'adaptation en réponse à une demande à cette dernière, et
pour déterminer (624) des valeurs pour le ou les paramètres de commande sur la base du niveau de lumière observé pendant la période d'adaptation ;
**caractérisé en ce que** la partie d'adaptation (214) est configurée pour déterminer (940, 950) un motif de gradation de l'intensité lumineuse sur la base du niveau de lumière observé pendant la période d'adaptation, et la partie de commande (216) est configurée, après la période d'adaptation, pour utiliser ledit motif de gradation de l'intensité lumineuse lors de la mise hors tension de ladite source de lumière (240).

2. Appareil selon la revendication 1, dans lequel la période d'adaptation comprend une ou plusieurs périodes consécutives de mise sous tension de la source de lumière, la durée combinée de la ou des périodes entraînant une durée totale prédéterminée.

3. Appareil selon la revendication 1 ou 2, dans lequel la partie de commande (216) est configurée pour faire fonctionner la source de lumière (240) à une première intensité lumineuse prédéterminée pendant la période d'adaptation sans se soucier des informations indiquant un niveau de lumière observé.

4. Appareil selon l'une quelconque des revendications précédentes, dans lequel le ou les paramètres de commande comprennent un niveau de lumière cible et dans lequel la partie de commande (216) est configurée pour régler l'intensité lumineuse de la source de lumière (240) en fonction du niveau de lumière observé et dudit niveau de lumière cible et dans lequel la partie d'adaptation (214) est configurée pour déterminer le niveau de lumière cible et/ou la vitesse de réglage et/ou l'intensité lumineuse minimale admissible en fonction de l'étendue de la variation du niveau de lumière observé pendant la période d'adaptation.

5. Appareil selon la revendication 4, dans lequel la partie d'adaptation (214) est configurée
pour déterminer (740), à la suite de l'étendue de la variation du niveau de lumière observé pendant la période d'adaptation satisfaisant un critère prédéterminé, le niveau de lumière cible sur la base du niveau de lumière observé moyen pendant la période d'adaptation, et
pour déterminer (760), à la suite de la variation du niveau de lumière observé pendant la période d'adaptation ne réussissant pas à satisfaire ledit critère prédéterminé, le niveau de lumière cible sur la base du niveau de lumière observé pendant la période d'adaptation.

6. Appareil selon la revendication 4 ou 5, dans lequel la partie d'adaptation (214) est configurée
pour définir, à la suite de l'étendue de la variation du niveau de lumière observé pendant la période d'adaptation satisfaisant un critère prédéterminé, que la vitesse de réglage vers une intensité lumineuse plus élevée soit plus rapide que vers une intensité lumineuse plus faible et/ou pour définir l'intensité lumineuse minimale admissible en fonction d'une intensité minimale prédéterminée, et
pour définir, à la suite de la variation du niveau de lumière observé pendant la période d'adaptation ne réussissant pas à satisfaire ledit critère prédéterminé, que la vitesse de réglage vers une intensité lumineuse plus élevée soit identique à celle vers une intensité lumineuse plus faible.

7. Appareil selon l'une quelconque des revendications 4 à 6, dans lequel ladite étendue de la variation du niveau de lumière observé est indiquée par la différence entre un niveau de lumière observé maximal et un niveau de lumière observé minimal pendant la période d'adaptation.

8. Appareil selon la revendication 7, dans lequel le niveau de lumière observé est indiqué sous la forme d'une séquence de niveaux de lumière moyennés sur une période de calcul de moyenne d'une durée prédéterminée avec la séquence de niveaux de lumière couvrant la durée de la période d'adaptation, dans lequel le niveau de lumière observé minimal représente le niveau de lumière moyenné le plus bas de la séquence et dans lequel le niveau de lumière observé maximal représente le niveau de lumière moyenné le plus élevé de la séquence.

9. Appareil selon l'une quelconque des revendications précédentes, dans lequel l'appareil est un ballast électrique pour exciter une lampe fluorescente, un appareil d'excitation pour exciter une diode électroluminescente ou un appareil de capteur.

10. Appareil selon l'une quelconque des revendications 1 à 9,
dans lequel les informations sensorielles comportent en outre des informations de présence indiquant la présence d'une personne dans la zone desservie par le luminaire et dans lequel, pendant la période d'adaptation, la partie de commande (216) est configurée pour mettre la source de lumière (240) sous tension ou hors tension en fonction des informations de présence,
dans lequel la partie d'adaptation (214) est configurée pour déterminer le motif de gradation de l'intensité lumineuse sur la base de l'étendue du changement de niveau de lumière observé lors de la mise sous tension ou hors tension de la source de lumière (240) pendant la période d'adaptation.

11. Appareil selon la revendication 10,
dans lequel la partie d'adaptation (214) est configurée, à la suite de ladite étendue de changement satisfaisant un second critère prédéterminé, pour sélectionner le motif de gradation de l'intensité lumineuse de telle sorte qu'il implique la mise hors tension de la source de lumière (240) après qu'une première période de temps des informations de présence n'indique pas une présence d'une personne dans la zone, et
dans lequel la partie d'adaptation (214) est configurée, à la suite de ladite étendue de changement ne réussissant pas à satisfaire le second critère prédéterminé, pour sélectionner le motif de gradation de l'intensité lumineuse de telle sorte qu'il implique la mise hors tension de la source de lumière (240) après qu'une seconde période de temps des informations de présence n'indique pas une présence d'une personne dans la zone, laquelle seconde période de temps est plus courte que la première période de temps.

12. Appareil selon la revendication 10 ou 11, dans lequel la partie d'adaptation (214) est configurée pour déterminer ladite étendue de changement comme étant la différence entre le niveau de lumière observé avant la mise sous tension/hors tension de la source de lumière et après la mise sous tension/hors tension de la source de lumière (240).

13. Appareil selon la revendication 12,
dans lequel ledit niveau de lumière observé avant la mise sous tension/hors tension de la source de lumière (240) est déterminé comme étant le niveau de lumière moyenné sur une période de temps prédéterminée qui précède immédiatement le moment de mise sous tension/hors tension de la source de lumière (240), et
dans lequel ledit niveau de lumière observé avant la mise sous tension/hors tension de la source de lumière (240) est déterminé comme étant le niveau de lumière moyenné sur une période de temps prédéterminée qui suit immédiatement le moment de mise sous tension/hors tension de la source de lumière (240).

14. Appareil selon l'une quelconque des revendications précédentes, dans lequel la partie de commande (216) est configurée pour demander à la partie d'adaptation (214) d'initier la période d'adaptation à la suite de l'activation de l'appareil.

15. Appareil selon l'une quelconque des revendications précédentes, dans lequel la partie de commande (216) est configurée pour demander à la partie d'adaptation (214) d'initier la période d'adaptation à la suite du niveau de lumière observé tombant en dessous d'un seuil prédéfini pendant une période dépassant une durée prédéfinie pendant que la source de lumière (240) est mise sous tension.

16. Procédé pour commander le fonctionnement d'une source de lumière (240) d'un luminaire, le procédé consistant :
à obtenir (610) des informations sensorielles comportant des informations indiquant un niveau de lumière observé dans une zone desservie par le luminaire et
à commander le fonctionnement de la source de lumière (240) en fonction des informations sensorielles et en fonction d'un ou de plusieurs paramètres de commande déterminés,
consistant
à initier (622) une période d'adaptation en réponse à une demande à cette dernière,
à déterminer (624) des valeurs pour le ou les paramètres de commande sur la base du niveau de lumière observé pendant la période d'adaptation, et
à déterminer (940, 950) un motif de gradation de l'intensité lumineuse sur la base du niveau de lumière observé pendant la période d'adaptation destiné à être utilisé lors de la mise hors tension de ladite source de lumière (240) après la période d'adaptation.

17. Programme d'ordinateur pour commander le fonctionnement d'une source de lumière (240) d'un luminaire, le programme d'ordinateur comprenant une ou plusieurs séquences d'une ou de plusieurs instructions qui, lorsqu'elles sont exécutées par un ou plusieurs processeurs, contraignent un appareil à réaliser au moins les étapes suivantes consistant :
à obtenir (610) des informations sensorielles comportant des informations indiquant un niveau de lumière observé dans une zone desservie par le luminaire et
à commander le fonctionnement de la source de lumière (240) en fonction des informations sensorielles et en fonction d'un ou de plusieurs paramètres de commande déterminés,
consistant
à initier (622) une période d'adaptation en réponse à une demande à cette dernière,
à déterminer (624) des valeurs pour le ou les paramètres de commande sur la base du niveau de lumière observé pendant la période d'adaptation, et
à déterminer (940, 950) un motif de gradation de l'intensité lumineuse sur la base du niveau de lumière observé pendant la période d'adaptation destiné à être utilisé lors de la mise hors tension de ladite source de lumière (240) après la période d'adaptation.
